Europäisches Patentamt

European Patent Office

Office européen des brevets

(11) Numéro de publication: **0 068 943**
A1

## DEMANDE DE BREVET EUROPEEN

(21) Numéro de dépôt: 82401023.5

(22) Date de dépôt: 04.06.82

(51) Int. Cl.³: **F 27 D 17/00**, C 21 B 3/08

(30) Priorité: 05.06.81 FR 8111146
31.12.81 FR 8124593

(43) Date de publication de la demande: 05.01.83
Bulletin 83/1

(84) Etats contractants désignés: **AT DE FR GB SE**

(71) Demandeur: **CLESID S.A., 51 rue Sibert,
F-42403 Saint-Chamond (FR)**

(72) Inventeur: **Forestier, Guy, 1 rue Rachel, F-42170 Saint
Just-Saint Rambert (FR)**

(74) Mandataire: **Dupuy, Louis et al, CREUSOT-LOIRE 15 rue
Pasquier, F-75383 Paris Cedex 8 (FR)**

(54) Dispositif de récupération de l'énergie contenue sous forme de chaleur dans les laitiers.

(57) Dispositif destiné à la récupération de l'énergie contenue sous forme de chaleur dans les laitiers de hauts-fourneaux et d'aciéries.

Il comporte un dispositif (1, 4, 5) effectuant une granulation (6) du laitier (2), une haute-tour de refroidissement (8) reposant sur le sol, munie à sa partie inférieure d'un dispositif (9, 10) de fluidisation des granulés seuls et à sa partie supérieure d'un dispositif (7) d'alimentation en granulés chauds (6), un dispositif (18, 19) d'extraction et d'élévation des granulés à partir dudit dispositif de fluidisation, ledit dispositif d'élévation (19) déversant lesdits granulés à la partie supérieure d'un échangeur (20) à plusieurs étages (21 à 25), reposant également sur le sol, dans lequel lesdits granulés sont amenés à s'écouler d'un étage à l'autre à contre-courant d'un fluide (26), et un ou plusieurs échangeurs de chaleur (16, 29) associé(s) aux fluides réchauffés extraits de ladite haute-tour (8) et dudit échangeur à plusieurs étages (20). En variante, au moins un des échangeurs de chaleur est constitué par un poste (35) de préchauffage de ferrailles ou autres produits d'addition.

1                                    0068943

"Dispositif de récupération de l'énergie contenue sous forme
de chaleur dans les laitiers"

La présente invention se rapporte à un dispositif destiné à la récupération de l'énergie contenue sous forme de chaleur dans les laitiers de
hauts-fourneaux et d'aciéries.

On connaît déjà des dispositifs, tel que celui décrit dans le brevet français 2.377.012, dans lesquels on transforme d'abord le laitier sous
forme de granulés à l'aide d'un tambour rotatif, puis où l'on effectue un
premier refroidissement de ces granulés dans un bain fluidisé de particules
solides auxiliaires, puis, après séparation des scories dans un appareil de
triage, où l'on fait passer celles-ci dans un échangeur de chaleur du type
à lit mobile dont le fond est constitué par un distributeur de gaz en cône
inversé. De tels dispositifs se révèlent être d'efficacité insuffisante aussi bien en ce qui concerne le premier étage de refroidissement primaire que
le second étage d'extraction de chaleur, et par ailleurs ils nécessitent un
appareil de triage dont l'entretien est coûteux.

Le dispositif selon l'invention ne présente pas ces inconvénients.
Il est caractérisé en ce qu'il comporte une haute-tour de refroidissement reposant sur le sol, munie à sa partie inférieure d'un dispositif de fluidisation des granulés seuls et à sa partie supérieure d'un orifice d'alimentation en granulés chauds, en ce qu'il comporte en outre un dispositif d'extraction et d'élévation des granulés de scories à partir dudit dispositif de
fluidisation, ledit dispositif d'élévation déversant lesdits granulés à la
partie supérieure d'un échangeur à plusieurs étages, reposant également sur
le sol, dans lequel lesdits granulés sont amenés à s'écouler d'un étage à
l'autre à contrecourant d'un fluide, et en ce qu'il comporte enfin un ou
plusieurs échangeurs de chaleur associés aux fluides réchauffés extraits de
ladite haute-tour et dudit échangeur à plusieurs étages.

La demanderesse a trouvé qu'il était par ailleurs avantageux pour
le fonctionnement de l'aciérie d'utiliser au moins un desdits échangeurs de
chaleur pour préchauffer des ferrailles ou autres produits d'addition au
four métallurgique.

Selon une variante avantageuse, le dispositif selon l'invention est
donc caractérisé en ce qu'au moins un des échangeurs de chaleur équipant le
dispositif décrit ci-dessus est constitué par un poste de pré-chauffage de
ferrailles ou autres éléments d'addition.

L'invention sera mieux comprise à l'aide de la description suivante de deux exemples de réalisation, en référence aux dessins annexés dans lesquels :

- la figure 1 représente, schématiquement et en vue latérale, un premier exemple de réalisation d'une installation conforme à l'invention.

- la figure 2 est une représentation schématique d'un second exemple de réalisation de l'invention.

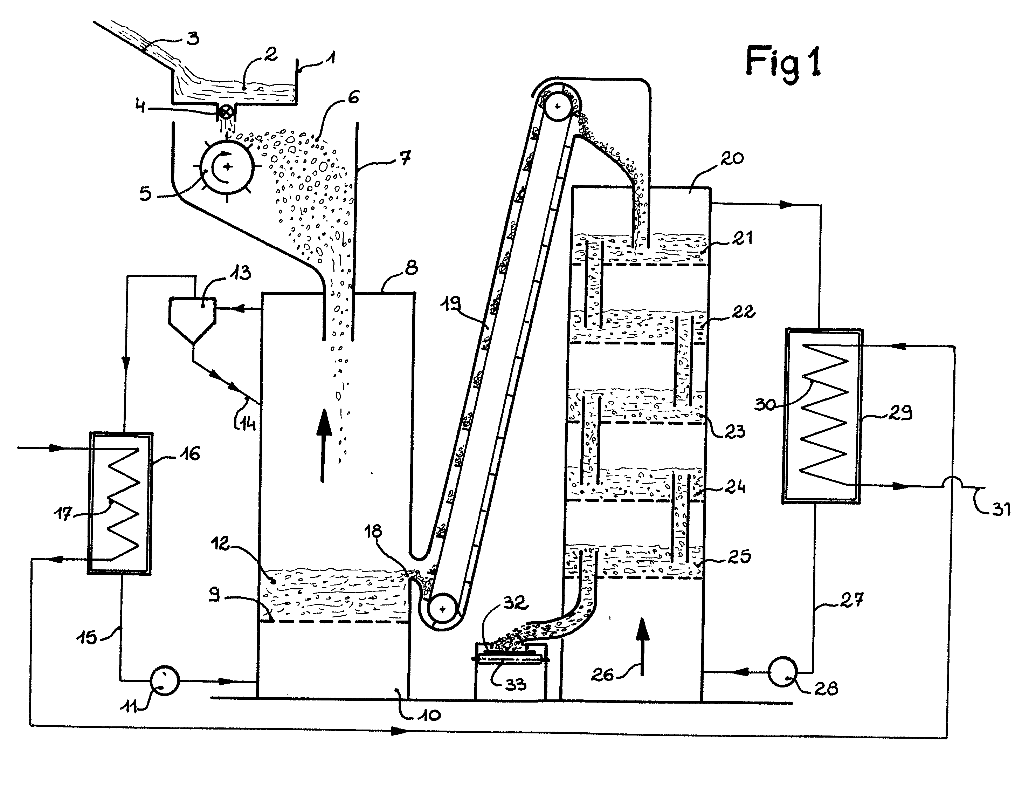

Sur la figure 1, la référence 1 désigne une cuve dans laquelle le laitier 2, en provenance de l'aciérie, s'écoule à l'aide d'une goulotte d'alimentation 3. Le fond de la cuve 1 est muni d'un robinet 4 permettant au laitier de s'écouler sur un tambour à ailettes 5 entrainé en rotation dans le sens des aiguilles d'une montre comme indiqué par la flèche sur le dessin.

Comme il est bien connu dans la technique, le tambour tournant 5 provoque une granulation du laitier. Les granulés formés 6 sont collectés par un entonnoir 7 et introduits à la partie supérieure d'une haute-tour de refroidissement 8 posée sur le sol. Cette tour 8, d'une hauteur égale à une dizaine de mètres par exemple, possède à sa partie inférieure un dispositif de fluidisation comportant une plaque poreuse 9 et un réservoir pressurisé 10 d'air de fluidisation. La circulation de l'air de refroidissement dans la tour 8 est assurée par un ventilateur 11 selon le circuit fermé indiqué par les flèches sur le dessin.

Les granulés 6 tombent donc dans la tour 8, y parcourent un trajet important à contre-courant du jet d'air ascendant au cours duquel ils subissent un premier refroidissement qui leur évite de s'agglomérer, puis s'arrêtent à proximité immédiate de la plaque poreuse 9 pour former un bain fluidisé 12.

Le circuit 15 de circulation d'air extérieur à la tour 8 comporte successivement un cyclone séparateur 13 qui renvoie les particules séparées du gaz dans la tour 8 par le tuyau 14, et un échangeur air-eau 16 qui transmet les calories dues à l'air réchauffé à un circuit de circulation d'eau 17.

Les granulés de scories du bain fluidisé 12 se déversent, sur le côté de la tour 8, par un déversoir à trop-plein 18 sur un transporteur-élévateur 19 de type à palettes métalliques bien connu dans la technique. Le transporteur-élévateur 19 alimente en granulés chauds la partie supérieure d'une seconde tour de refroidissement 20, plus haute que la tour 8 dans l'exemple considéré, et qui repose également sur le sol.

La partie intérieure de la tour 20 est constituée par une série classique de bains fluidisés (21à 25) dans laquelle les granulés de scories circulent d'un bain fluidisé au suivant à contre-courant d'un courant d'air 26. De même que pour la tour 8, l'air est mis en circulation dans l'échangeur à plusieurs étages et à contre-courant 20 à l'aide d'un circuit extérieur 27 comportant un ventilateur 28. De même que précèdemment, l'air réchauffé par les granulés dans la tour 20 cède sa chaleur, dans un échangeur air-eau 29, à un circuit de circulation d'eau 30. Avantageusement, comme représenté sur le dessin, les circuits d'eau 17 et 30 sont placés en série, ce qui permet d'obtenir de l'eau très chaude à la sortie 31 de l'échangeur 29.

Les granulés refroidis sont évacués en bas de la tour 20 sur un transporteur à bande 32 équipé de rouleaux 33, comme représenté sur le dessin.

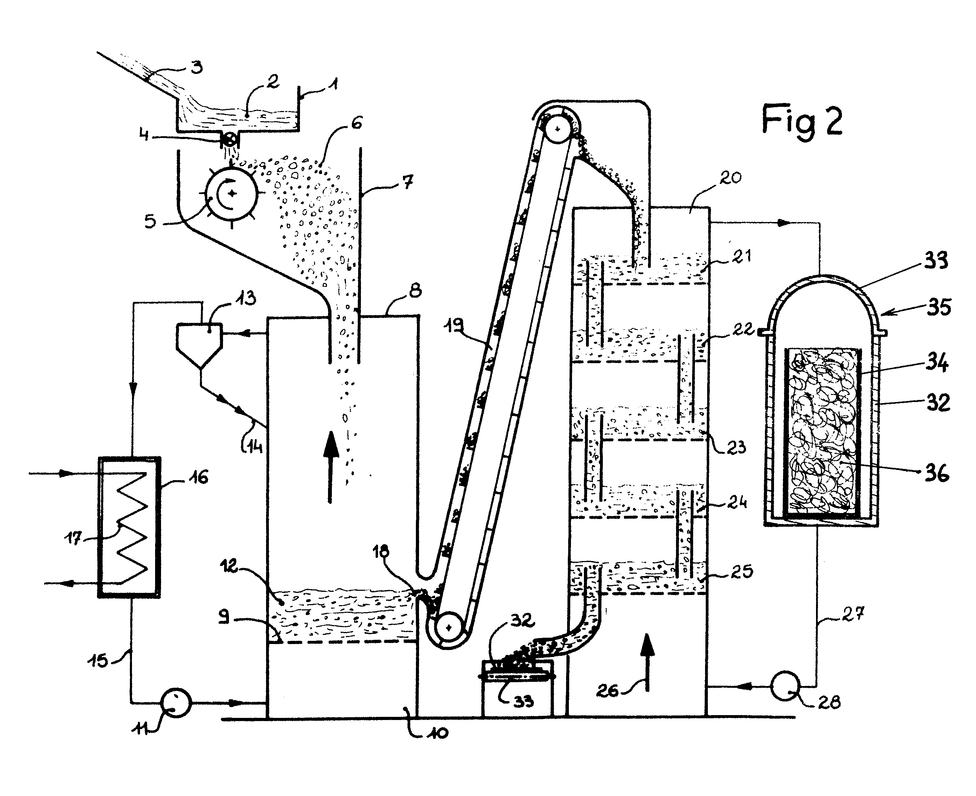

En se reportant maintenant à la figure 2, qui représente schématiquement une variante de réalisation de l'installation de la figure 1, l'air réchauffé par les granulés dans la tour 20 traverse, dans ce mode de réalisation, un poste 35 de préchauffage de ferrailles. Ce poste de préchauffage de ferrailles ou autres produits d'addition est constitué d'une enceinte 32 munie d'un couvercle 33 par lequel on introduit un panier 34 contenant les ferrailles ou les autres produits d'addition à pré-chauffer 36.

Pour une meilleure continuité de marche de l'installation, on peut disposer de plusieurs postes de préchauffage de ferrailles de ce type, qui sont mis en service ou non par utilisation de vannes.

Le poste de pré-chauffage de ferrailles peut encore être constitué comme un accumulateur de chaleur de sorte qu'il puisse accumuler de la chaleur en l'absence de ferrailles à pré-chauffer, cette chaleur accumulée pouvant être utilisée au préchauffage des ferrailles en l'absence de laitier à refroidir.

Il va de soi que l'invention n'est pas limitée aux dispositifs qui viennent d'être décrits. Par exemple, dans ces dispositifs , le déversoir 18 alimente directement l'élévateur 19. On aurait pu avoir un stockage intermédiaire alimentant ledit élévateur 19. On pourrait de même, sans sortir du cadre de l'invention, réguler le débit sortant de la cuve 1 à l'aide du robinet 4 pour assurer une marche continue de l'installation. De même l'échangeur à plusieurs étages pourrait être d'un autre type que l'échangeur à lit fluidisé décrit. Il pourrait par exemple être constitué par une série d'étages d'échange à lit fixe, entre lesquels les granulés circulent de façon pouvant être discontinue, à contre-courant d'un fluide pouvant être constitué soit par un courant gazeux soit par un courant liquide, tel que par un circuit d'eau circulant dans des tubes métalliques.

　　　　　0068943

REVENDICATIONS

1.- Dispositif destiné à la récupération de l'énergie contenue sous forme de chaleur dans les laitiers de hauts fourneaux et d'aciéries, du type comportant tout d'abord un dispositif (1, 4, 5) effectuant une granulation (6) du laitier (2), caractérisé en ce qu'il comporte une haute-tour de refroidissement (8) reposant sur le sol, munie à sa partie inférieure d'un dispositif (9,10) de fluidisation des granulés seuls et à sa partie supérieure d'un dispositif (7) d'alimentation en granulés chauds (6), en ce qu'il comporte en outre un dispositif (18, 19) d'extraction et d'élévation des granulés à partir dudit dispositif de fluidisation, ledit dispositif d'élévation (19) déversant lesdits granulés à la partie supérieure d'un échangeur (20) à plusieurs étages (21 à 25), reposant également sur le sol, dans lequel lesdits granulés sont amenés à s'écouler d'un étage à l'autre à contre-courant d'un fluide (26), et en ce qu'il comporte enfin un ou plusieurs échangeurs de chaleur (16, 29) associé(s) aux fluides réchauffés extraits de ladite haute-tour et dudit échangeur à plusieurs étages.

2.- Dispositif selon la revendication 1, caractérisé en ce que les circuits (17, 30) d'extraction de calories desdits échangeurs de chaleur (16,29) associés aux fluides réchauffés extraits sont placés en série.

3.- Dispositif selon la revendication 1, caractérisé en ce qu'au moins un desdits échangeurs de chaleur est constitué par un poste (35) de préchauffage de ferrailles ou autres produits d'addition.

4.- Dispositif selon la revendication 3, caractérisé en ce que ledit poste de préchauffage de ferrailles ou autres produits d'addition est constitué comme un accumulateur de chaleur.

Fig 1

0068943

Fig 2

0068943

Office européen
des brevets

**RAPPORT DE RECHERCHE EUROPEENNE**

Numéro de la demande

EP 82 40 1023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 260 376 (GRANGES OXELOSUNDS JARNVERK AB) * Revendications 1-15; figure unique * | 1 | F 27 D 17/00 C 21 B 3/08 |
| A | PATENTS ABSTRACTS OF JAPAN, vol. 1, no. 79, 26 juillet 1977, page 1547C77 & JP - A - 52 41195 (MITSUBISHI JUKOGYO) 30-03-1977 | | |
| A | FR-A-2 360 860 (PACIFIC METALS) | | |
| A | FR-A-1 577 442 (GOSUDARSTVENNY NAUCHNO-ISSLEDOVATELSKY INSTITUT TSVETNYKH METALLOV) | | |
| A,D | FR-A-2 377 012 (ISHIKAWAJIMA-HARIMA) | | |

DOMAINES TECHNIQUES RECHERCHES (Int. Cl. 3)

F 27 D
F 22 B
C 21 B
C 04 B
C 21 C

Le présent rapport de recherche a été établi pour toutes les revendications

| Lieu de la recherche | Date d'achèvement de la recherche | Examinateur |
|---|---|---|
| LA HAYE | 14-09-1982 | ELSEN D.B.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82